# EUROPEAN PATENT APPLICATION

(11) **EP 1 113 364 A2**
(43) Date of publication of application: **04.07.2001**
(21) Application number: 00108197.5
(22) Date of filing: 13.04.2000
(51) Int. Cl.: G06F 11/267

(54) **A diagnostic method and device of a computer system**

(30) Priority: 29.11.1999 DE 29920933 U
(71) Applicant: Chang, Fa-Hsun, Taipei, Taiwan (TW)
(72) Inventor: Leu, Sophie, Taipei, Taiwan (TW)
(74) Representative: Zeitler, Giselher, Dipl.-Ing.

(57) **Abstract**

A diagnostic system for diagnosing peripheral components of a computer system is provided. The diagnostic system comprises a diagnosing device and a presenting apparatus.- Without using an extra maintenance card, the diagnosing device detects which peripheral component is in an abnormal status. The presenting apparatus presents the checking resulting through a display unit or vocal signals. The diagnostic system can be installed on the motherboard of a computer system or located at front or rear side of the external slug covering the computer system.

## Description

### FIELD OF THE INVENTION

The present invention relates to the field of diagnostic methods and apparatuses for computer systems. More specifically, this invention relates to a diagnostic system for diagnosing the peripheral components of a computer system without using an external maintenance card.

### BACKGROUND OF THE INVENTION

The diagnosis of faulty computer components, at times, can be a tedious process. For systems which are incapable of powering up and performing a system boot startup initialization process, to detect faulty components might require substantial time and effort.

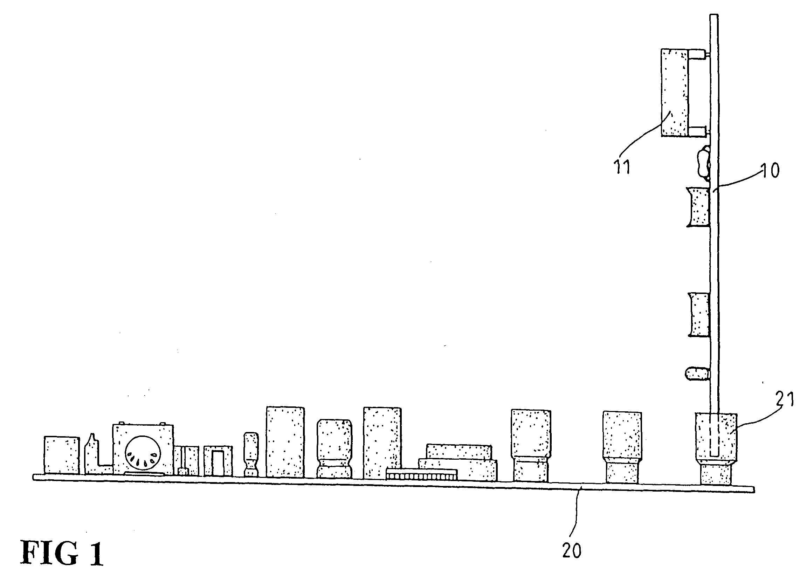

Conventional diagnostic method of diagnosing a faulty computer system is to use an external maintenance card. An example of the conventional diagnostic system employing an external maintenance card is shown in Fig. 1. As shown in Fig. 1, an external maintenance card 10 is inserted in socket 21 of a motherboard 20. A display unit 11 is attached on the motherboard 20 to indicate the carrying information based on the received diagnostic results. The information may include meaningful numbers or light bubble numbers. Problems are being found and solved by interpreting these numbers according to their definitions in the maintenance manual. However, it requires extra and expensive cost for a user to purchase an external maintenance card. As a result, an external maintenance card is usually used by specific persons such as maintenance technicians. In the mean time, when the computer system is out of order, it wastes time and money just to request the diagnosis of the computer system.

Based on the findings of the aforementioned drawbacks, it is desirable to have users diagnose computer systems themselves when the computers are out of order. Once errors are found, it may be desirable to have users debug the errors through a less expensive and ease-to-use diagnostic systems.

### SUMMARY OF THE INVENTION

This invention has been made to overcome the above mentioned drawbacks for diagnostic systems of a computer system. It is an object of the present invention to provide a diagnostic system for diagnosing the peripheral components of a computer system without using an external maintenance card.

To achieve this object, the diagnostic system of the invention may be built on the motherboard of a computer system. By having a built-in diagnostic system, the motherboard containing the diagnostic system provides users with functions of diagnosing the peripheral components of a computer system. User can be alarmed of the abnormal operating status or find out the defective peripheral components by interpreting the meaning of the information shown in a display unit or vocal signals generated by a synthesizer of the diagnostic system. Motherboards with the diagnostic system in accordance with the present invention require no external maintenance cards. Hence, the cost can be significantly cut down.

In the first embodiment of the diagnostic system of this invention, the diagnostic system is located in an available space of the motherboard of a computer system. In this manner, users may immediately find out the occurrence of problems during assembling a computer system having at least one peripheral component connected thereto.

In the second embodiment of the diagnostic system of the present invention, the diagnostic system is located at front or rear side of the external slug covering the computer system. In this embodiment, the diagnostic system is connected via communication link to the motherboard of a computer system. Users may be informed of the operating status of peripheral components directly from the outlook of a computer system.

In the third embodiment in accordance with the present invention, the diagnostic system comprises a vocal signal synthesizer and a decoder built on the motherboard. The vocal synthesizer is connected to the decoder via external bus. Once any peripheral component functions abnormally, the decoder receives signals from the faulty component. Further, vocal signals are generated by the synthesizer and outputted by speakers so that users can be aware of which component functions abnormally.

It is another object to provide a diagnostic method and apparatus of a computer system that the checking information can be presented by a display unit or by vocal signals by programming the BIOS (basic input output system).

It is still an object to provide a diagnostic method and apparatus of a computer system that a temperature sensor is installed on the motherboard. After presenting the checking information, the temperature of the CPU can be displayed on the display unit or outputted as vocal signals. As a result, the temperature of the CPU can be appropriately controlled to avoid overheat or burning out.

These and other objects and advantages of the present invention will become more apparent from a consideration of the following detailed description of a preferred embodiment thereof, when read in conjunction with the accompanying drawings, wherein:

### BRIEF DESCRIPTION OF THE DRAWINGS

Fig. 1 illustrates a conventional diagnostic approach in a computer system by means of an external maintenance card;
Fig. 2 illustrates the diagnostic architecture in a computer system in accordance with the first embodiment of the present invention;
Fig. 3 depicts the motherboard configuration in accordance with the first embodiment of the present invention;
Fig. 4 illustrates the second embodiment of the diagnostic system in accordance with the present invention;
Fig. 5 depicts the third embodiment of the diagnostic system in accordance with the present invention;
Fig. 6 illustrates the overall configuration in accordance with the third embodiment of the present invention.

### DETAILED DESCRIPTION OF THE PREFERRED EMBODIMENT

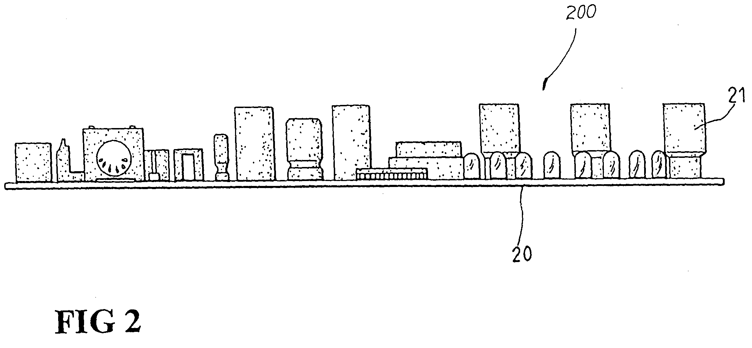

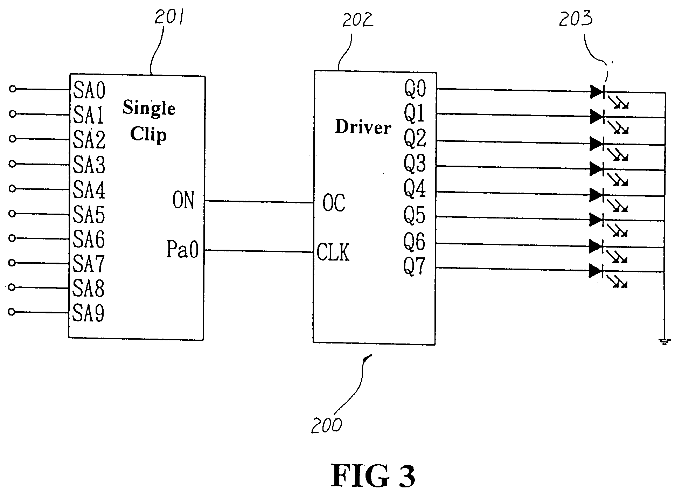

Fig. 2 illustrates a diagnostic architecture in a computer system in accordance with the first embodiment of the present invention. The operation among the components in the embodiment is also illustrated in Fig. 3. The diagnostic apparatus of the present invention comprises a single chip 201, a driver 202 and a display unit 203. The single chip 201 contains a plurality of inputs SA0∼SA9 and two outputs, Pa0 and ON. The inputs SA0∼SA9 are connected via buses to the peripheral components of the motherboard 20. Receiving signals from inputs SA0∼SA9, the single chip 201 decides which peripheral components are out of order or in an abnormal status. The two outputs Pa0 and ON are connected to the driver 202. The single chip 201 also provides the driver 202 via the two outputs with a clock signal CLK and a start-up signal OC.

If a peripheral component is out of order or in an abnormal status, the single chip 201 receives a message corresponding to an input that connects the peripheral component. After having known the peripheral component, the single chip 201 asserts a clock signal CLK and a startup signal OC to the driver 202. The driver 202 immediately transmits the message signal via port 80 to the display unit 203. This drives and lightens the display unit 203. The display unit 203 may include light emission display (LED) shown in Fig. 2.

The diagnostic apparatus according to the first embodiment of the present invention is located in an available space of the motherboard in a computer system. When users are assembling computer systems, they can easily tell the diagnosed peripheral components by interpreting the meaning of the information shown on the diagnostic apparatus in accordance with the present invention. The problems of the peripheral components may further be solved by the instruction of a maintenance manual.

Fig. 3 shows the overall configuration in accordance with the first embodiment of the present invention. As shown in Fig. 2, a diagnostic apparatus 200 is substantially mounted to a portion of the motherboard 20. Therefore, clients may diagnose the peripheral components of a computer system without using an external maintenance card. It also eliminates the high cost associated with purchasing the specialized external maintenance card.

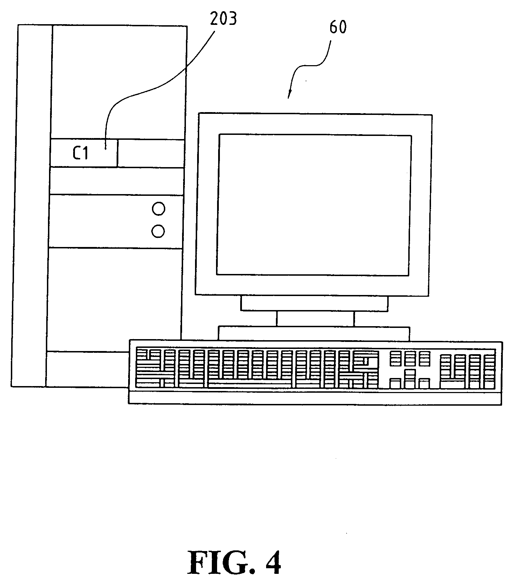

Fig. 4 illustrates an alternative diagnostic system in accordance with the second embodiment of the present invention. In this embodiment, the diagnostic system is an external apparatus connected to a computer system. As shown in Fig. 4, the display unit 203 is located at front or rear side of the external slug covering a computer system 60. The display unit 203 is connected via communication link (not visible in the drawings) to the motherboard 20 of the computer system. If a peripheral component is out of order or in an abnormal status, it thus may indicate the operating status of the peripheral component through the communication link. For example, if a signal message Cl is generated, it may indicate that dynamic random access memory can't be found. Users may thus know the operating status of peripheral components directly from the outlook of a computer. The communication link of the diagnostic system to the motherboard may employ cables or the like.

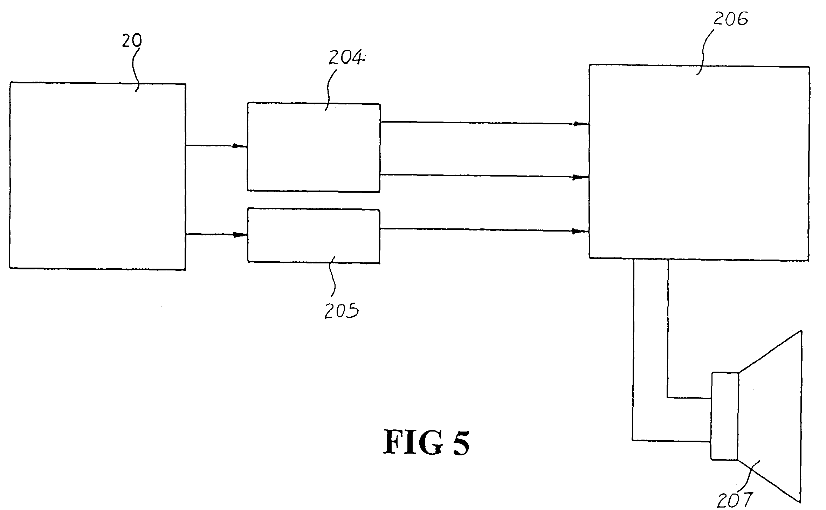

Fig. 5 shows the third embodiment in accordance with the present invention. In the embodiments illustrated above, the checking information is displayed on the display unit 203. However, it is more convenient for users if the checking information is presented by vocal signals. The diagnostic system in accordance with the third embodiment of the present invention comprises a decoder 204 and a vocal signal synthesizer 206. The decoder 204 is built on the motherboard 20. The synthesizer 206 is connected to the decoder 204 through system bus, and further to speakers 207 of the computer system 204. Once a component functions abnormally, the decoder 204 receives signals from the faulty component and output resulting signals to the synthesizer 206 so that the checking information can be presented via the speakers 207. Hence, a user can be informed of system status vocally.

Further, in accordance with the present invention, a temperature sensor 205 is installed on the motherboard to detect the temperature of the CPU. After presenting the component checking information, the current CPU temperature is presented by the display unit or vocal signals generated by the synthesizer 206. Consequently, the CPU temperature can be appropriately controlled to avoid overheat or burning out.

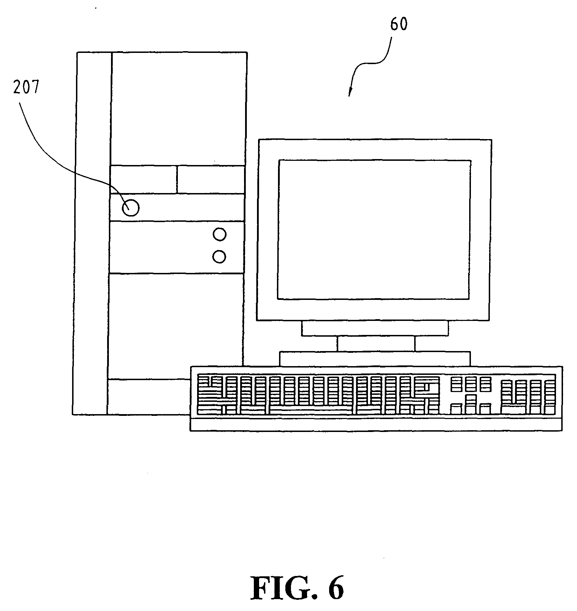

Fig. 6 is the third embodiment of the present invention installed on computer system 60. In the embodiment, speaker 207 is set at front or rear side in the external slug covering of computer system 60.

Speaker 207 connects via communication link (not visible in the drawing) to voice signal synthesizer 206. If a peripheral component is out of order or in an abnormal status, speaker 207 thus may launch a sound corresponding the signal message from voice signal synthesizer 206 triggered by decoder 204. Therefore, users may know the operating status of peripheral components directly from the sound corresponding to the signal message.

Although the preferred embodiment has been described to illustrate the present invention, it is apparent that changes and modifications in the specifically described embodiment can be carried out without departing from the scope of the present invention. Such modifications and changes should be considered within the scope of the present invention limited by the appended claims.

## Claims

1. In a computer system having at least one peripheral component connected thereto, a diagnostic system for diagnosing said peripheral component comprising:
a diagnostic device built on the motherboard of said computer system;
a display unit connected said diagnostic device.

2. The diagnostic system as claimed in claim 1,wherein: said diagnostic device further comprising:
a single chip for detecting peripheral components;
a driver for driving and truing on said display unit.

3. The diagnostic system as claimed in claim 1, wherein: said single chip is applied to determine which component is out of order or in an abnormal status, further said display unit is used to display information resulting from peripheral components that are out of order.

4. The diagnostic system as claimed in claim 2, wherein said single chip further comprising:
a plurality of inputs for receiving signals from said peripheral components that are out of order; and
a plurality of outputs for generating signals to said driver when faulty peripheral components are detected.

5. The diagnostic system as claimed in claim 1, wherein the component checking information can be displayed on said display unit by programming the computer system BIOS.

6. The diagnostic system as claimed in claim 1, wherein a temperature sensor is installed on the motherboard to detect the CPU temperature, further the CPU temperature is displayed on said display unit.

7. In a computer having at least one peripheral component connected thereto, a diagnostic system for diagnosing said peripheral component comprising:
a decoder to detect faulty components; and
a vocal signal synthesizer.

8. The diagnostic system as claimed in claim 5, wherein said decoder is used to receive signals from peripheral components, further once a faulty component is detected, said decoder outputs signals to said vocal signal synthesizer so that vocal signals can be generated by said vocal signal synthesizer and can be further outputted by the speaker of the computer system.

9. The diagnostic system as claimed in claim 5, wherein said decoder is installed on the motherboard, and said vocal signal synthesizer is connected to said decoder via system bus.

10. The diagnostic system as claimed in claim 5, wherein a temperature sensor is installed on the motherboard to detect the temperature of the computer CPU, further the CPU temperature can be presented via said vocal signal synthesizer and the speakers of the computer system.
